# EUROPEAN PATENT SPECIFICATION

(11) **EP 3 550 431 B1**
(45) Date of publication and mention of the grant of the patent: **08.12.2021**
(21) Application number: 18893336.0
(22) Date of filing: 16.01.2018
(51) Int. Cl.: G06F 9/46, G06F 9/48, G06F 1/14

(54) **TIMER IMPLEMENTATION METHOD AND DEVICE**
VERFAHREN UND VORRICHTUNG ZUR TIMER-IMPLEMENTIERUNG
PROCÉDÉ ET DISPOSITIF DE MISE EN OEUVRE DE TEMPORISATEUR

(43) Date of publication of application: 09.10.2019
(73) Proprietor: Shenzhen Goodix Technology Co., Ltd., Shenzhen, Guangdong 518045 (CN)
(72) Inventor: ZHU, Ming, Shenzhen, Guangdong 518045 (CN); WANG, Mingliang, Shenzhen, Guangdong 518045 (CN); YIN, Guochao, Shenzhen, Guangdong 518045 (CN); HU, Lihua, Shenzhen, Guangdong 518045 (CN)
(74) Representative: J A Kemp LLP
(86) International application number: PCT/CN2018/072867
(87) International publication number: WO 2019/140551

(56) References cited:
- CN-A- 1 877 535
- CN-A- 101 840 353
- CN-A- 101 840 353
- CN-A- 101 840 353
- CN-A- 102 637 126
- US-A1- 2014 281 088
- US-B1- 6 732 287
- US-B1- 6 732 287
- J Vidal ET AL: "POSIX TIMERS implementation in RTLinux", , 18 August 2013 (2013-08-18), XP055738194, Retrieved from the Internet: URL:https://web.archive.org/web/2013081810 5300if_/http://www.ece.ubc.ca:80/~brucew/e book/posix-timers-info.pdf [retrieved on 2020-10-08]
- Wikipedia Community: "Bit field - Wikipedia", , 28 October 2017 (2017-10-28), XP055740164, Retrieved from the Internet: URL:https://web.archive.org/web/2017102800 1509/https://en.wikipedia.org/wiki/Bit_fie ld [retrieved on 2020-10-14]

## Description

The present invention relates to the technical field of embedded system timer, and in particular, to an implementation method and apparatus of timer.

In an embedded system, timers are often used. With the increasing demand for timing functions in applications and the need for timeout mechanisms for processor peripheral modules, the demand for the number of timers is growing. However, the number of hardware timers is limited, so more timers are needed to be provided according to software solution.

The software timer scheme adopted by the embedded real-time operating system FreeRTOS^{®} is, at present, a commonly used software timer implementation scheme. The FreeRTOS implements software timers as the following: creating a timer linked list, into which a new timer will be added when the timer is being created; creating a daemon when the timer linked list is created, the daemon looping through the timers in the timer linked list at a given interval to determine whether a timer is expired, and executing a corresponding scheduled task when a timer has indeed expired.

However, the above-mentioned software timer implementation of continuously querying the software timer linked list for a timer that is expired will lead to added system power consumption.

CN101840353A discloses a timing method for system time in a real-time embedded operating system. The timing method comprises the following steps of: when a timer is time over, maintaining the system time, and then shifting out a ready task from a delay task link list; if the delay task link list is empty, finishing the operation, and if the delay task link list is not empty, subtracting the current system time from the next task revival time to work out a task revival time difference; and if the time difference is greater than an allowable timing period of the timer, setting the timing period as a maximum timing period, and if the time difference is smaller than the allowable timing period of the timer, setting the timing period as the time difference. By replacing the conventional fixed timing time with the variable timing time, and replacing the conventional time unit of a hardware timing time with a time unit of a clock source period of a hardware timer, the method reduces the unnecessary overhead of maintaining the system time when the system is idle and improves the response time of the system at the same time. By relying on ordered software timer list, this mechanism allows efficient management, retrieval and update of software timers. Both advantages contribute towards reducing the power consumption.

"POSIX Timers implementation in RTLinux" by Vidal et al. is retrievable archived at https://web.archive.org/web/20130818105300if_/http://www.ece.ubc.ca:80/~brucew/ ebook/posix-timers-info.pdf. It discloses the mechanism for software timer management in real-time operating systems. This publication, inter alia, describes the dynamic management of one-time and periodic timers using ordered timer linked lists.

In view of the above, the present invention provides an implementation method and apparatus of timer for reducing system power consumption.

For the purpose of achieving the above objectives, in a first aspect, the present invention provides an implementation method of timer in an embedded real-time operating system including:
determining a counting period of a hardware timer according to expiration time of a timer node which firstly expires in a timer linked list of a software timer, where the timer nodes in the timer linked list share the hardware timer, the software timer implements a timing function of the hardware timer; and
when the counting period of the hardware timer is expired, traversing through the timer node in the timer linked list and updating the counting period of the hardware timer;
where the updating the counting period of the hardware timer includes:
   determining whether the timer linked list is empty and,
   if the timer linked list is empty, updating the counting period of the hardware timer with a maximum counting period of the hardware timer;
   if the timer linked list is not empty, obtaining the expiration time of the timer node which firstly expires in the timer linked list and current system time;
   determining whether a time interval between the expiration time of the timer node which firstly expires and the current system time is greater than the maximum counting period of the hardware timer and,
   if the time interval is greater than the maximum counting period of the hardware timer, updating the counting period of the hardware timer with the maximum counting period of the hardware timer;
   if the time interval is less than or equal to the maximum counting period of the hardware timer, updating the counting period of the hardware timer with the time interval;
   where each timer node in the timer linked list is sorted according to their expiration time;
   where the traversing through the timer node in the timer linked list and updating the counting period of the hardware timer includes:
setting a first timer node in the timer linked list to be a current timer node, and performing traversing operation on the current timer node, the traversing operation including:
   obtaining current system time;
   determining whether the current timer node is not empty and the current system time is greater than or equal to the expiration time of the current timer node;
   updating the counting period of the hardware timer if the current timer node is empty or the current system time is less than the expiration time of the current timer node;
   if the current timer node is not empty and the current system time is greater than or equal to the expiration time of the current timer node, executing a callback function of the current timer node; and
   setting a next timer node in the timer linked list to be the current timer node, and returning to perform the traversing operation;
   where, after the executing a callback function of the current timer node, the method further includes:
determining whether the current timer node is a periodic timer and,
if the current timer node is a periodic timer, updating the expiration time of the current timer node, and setting an update flag of the timer linked list to be True;
if the current timer node is a one-time timer, deleting the current timer node;
when the current timer node is empty or the current system time is less than the expiration time of the current timer node, then before updating the counting period of the hardware timer, the method further comprises:
   determining whether the update flag of the timer linked list is set to be True; and
   updating ordering of the timer linked list if the update flag of the timer linked list is set to be True.

By determining whether the time interval between the expiration time of the timer node which firstly expires and the current system time is greater than the maximum counting period of the hardware timer, and updating the counting period of the hardware timer with the maximum counting period of the hardware timer when the time interval is greater than the maximum counting period of the hardware timer, the problem of the hardware timer count overflow can be solved. By updating the counting period of the hardware timer to a time interval when the time interval is less than or equal to the maximum counting period of the hardware timer, it is possible to only traverse through the timer linked list when a timer node is expired in the timer linked list, reducing system power consumption.

By determining the counting period of the hardware timer according to the expiration time of the timer node which firstly expires in the timer linked list, and when the counting period of the hardware timer is expired, traversing through the timer node in the timer linked list and updating the counting period of the hardware timer, the traversing through the timer linked list is performed only when a timer node is expired, thus no need to constantly traverse through the timer linked list. Therefore, the system power consumption and processor resource occupancy can be effectively reduced. Moreover, since the counting period of the hardware timer is updated in real time according to the expiration time of the timer node which firstly expires in the timer linked list, the accuracy of the software timer is not affected by the counting period of the hardware timer because the accuracy of the software timer is equivalent to the accuracy of the hardware timer. Therefore, the accuracy of the software timer can be effectively improved.

Sorting the timer nodes in the timer linked list according to their expiration time facilitates operations such as searching and traversing for the timer linked list, improving the processing speed.

When traversing through the timer linked list, the current system time is firstly obtained, and expired timer node are identified according to the current system time, so that the scheduled tasks of the timer node with similar expiration times can be processed in time to reduce the system delay.

By setting the update flag of the linked list, it is possible to avoid missing out on timer node during the traversing, improving the accuracy of the software timer.

As an alternative implementation of the embodiment of the present invention, the method may further include:
inserting a new timer node into the timer linked list; and
when the new timer node is the first node in the timer linked list, updating the counting period of the hardware timer.
When a new timer node created in the timer linked list is the first node in the timer linked list, the counting period of the hardware timer is updated, guaranteeing the correct order of processing the timer node in the timer linked list.

As an alternative implementation of the embodiment of the present invention, the inserting a new timer node into the timer linked list specifically includes:
obtaining a timing duration of a timer node to be created and current system time;
calculating expiration time of the timer node to be created according to the timing duration of the timer node to be created and the current system time; and
inserting the timer node to be created as a new timer node into the timer linked list according to the expiration time of the timer node to be created.

As an alternative implementation of the embodiment of the present invention, the method further includes:
when a software timer is turned off, deleting a timer node corresponding to the turned off software timer from the timer linked list; and
when the deleted timer node is a first node in the timer linked list, updating the counting period of the hardware timer.

When a timer node deleted from the timer linked list is the first node in the timer linked list, the counting period of the hardware timer is updated, guaranteeing the correct order of processing the timer nodes in the timer linked list.

As an alternative implementation of the embodiment of the present invention, when the counting period of the hardware timer is expired and before the traversing through a timer node in the timer linked list, the method further includes:
updating system time with the expiration time of the counting period of the hardware timer.

When the counting period of the hardware timer is expired, before the timer node in the timer linked list is traversed, the system time is updated with the expiration time of the counting period of the hardware timer, so that the timer linked list and the system timing may share a common hardware timer without affecting system timing.

In a second aspect, an embodiment of the present invention provides an implementation apparatus of timer in an embedded real-time operating system including: a determining module, a traversing module and a timer updating module, where
the determining module is configured to determine a counting period of a hardware timer according to expiration time of a timer node which firstly expires in a timer linked list;
the traversing module is configured to, when the counting period of the hardware timer is expired, traverse through a timer node in the timer linked list, and instruct the timer updating module to update the counting period of the hardware timer;
where the timer updating module includes:
   a determining unit, configured to determine whether the timer linked list is empty;
   an updating unit, configured to update the counting period of the hardware timer with a maximum counting period of the hardware timer when the timer linked list is empty;
   a first obtaining unit, configured to obtain the expiration time of the timer node which firstly expires in the timer linked list and current system time when the timer linked list is not empty;
   the determining unit is further configured to determine whether a time interval between the expiration time of the timer node which firstly expires and the current system time is greater than the maximum counting period of the hardware timer; and
   the updating unit is further configured to update the counting period of the hardware timer with the maximum counting period of the hardware timer when the time interval is greater than the maximum counting period of the hardware timer, and update the counting period of the hardware timer with the time interval when the time interval is less than or equal to the maximum counting period of the hardware timer;
   where each timer node in the timer linked list is sorted according to their expiration time;
   where the traversing module is configured to:
   set a first timer node in the timer linked list to be a current timer node, and perform traversing operation on the current timer node, the traversing operation including:
      obtaining current system time;
      determining whether the current timer node is not empty and the current system time is greater than or equal to the expiration time of the current timer node and,
      updating the counting period of the hardware timer if the current timer node is empty or the current system time is less than the expiration time of the current timer node;
   if the current timer node is not empty and the current system time is greater than or equal to the expiration time of the current timer node, executing a callback function of the current timer node;
   setting a next timer node in the timer linked list to be the current timer node, and returning to perform the traversing operation;
where the traversing module is further configured to:
   determine whether the current timer node is a periodic timer, and if the current timer node is a periodic timer, instruct the timer updating module to update the expiration time of the current timer node, and set an update flag of the timer linked list to be True;
   if the current timer node is a one-time timer, delete the current timer node;
   the traversing module is further configured to: determine whether the update flag of the timer linked list is set to be True when the current timer node is empty or the current system time is less than the expiration time of the current timer node, and before updating the counting period of the hardware timer; and
   update ordering of the timer linked list if the update flag of the timer linked list is set to be True.

As an alternative implementation of the embodiment of the present invention, the apparatus further includes:
a node creating module, configured to insert a new timer node into the timer linked list; and
the node creating module is further configured to, when the new timer node is the first node in the timer linked list, update the counting period of the hardware timer.

As an alternative implementation of the embodiment of the present invention, the node creating module specifically includes:
a second obtaining unit, configured to obtain a timing duration of a timer node to be created and current system time;
a calculating unit, configured to calculate expiration time of the timer node to be created according to the timing duration of the timer node to be created and the current system time; and
an inserting unit, configured to insert the timer node to be created as a new timer node into the timer linked list according to the expiration time of the timer node to be created.

As an alternative implementation of the embodiment of the present invention, the apparatus further includes:
a deleting module, configured to, when a software timer is turned off, delete a timer node corresponding to the turned off software timer from the timer linked list; and
the deleting module is further configured to: when the deleted timer node is a first node in the timer linked list, update the counting period of the hardware timer.

As an alternative implementation of the embodiment of the present invention, the apparatus further includes: a system time updating module, configured to, when the counting period of the hardware timer is expired and before traversing through the timer node in the timer linked list, update system time with the expiration time of the counting period of the hardware timer.

For the beneficial effects from the implementation apparatus of timer provided by the above second aspect and various possible implementations thereof, reference may be made to the beneficial effects from the first aspect and various possible implementations thereof, which will not be repeated herein.

### BRIEF DESCRIPTION OF THE DRAWINGS

FIG. 1 is a schematic flowchart of an implementation method of timer according to an embodiment of the present invention;
FIG. 2 is a schematic flowchart of a method for updating a counting period of a hardware timer according to an embodiment of the present invention;
FIG. 3 is a schematic flowchart of another implementation method of timer according to an embodiment of the present invention;
FIG. 4 is a schematic flowchart diagram of still another implementation method of timer according to an embodiment of the present invention;
FIG. 5 is a schematic flowchart of a method for inserting a new timer node in a timer linked list according to an embodiment of the present invention;
FIG. 6 is a schematic flowchart of still another implementation method of timer according to an embodiment of the present invention;
FIG. 7 is a schematic structural diagram of an implementation apparatus of timer according to an embodiment of the present invention; and
FIG. 8 is a schematic structural diagram of another implementation apparatus of timer according to an embodiment of the present invention.

### DETAILED DESCRIPTION OF THE EMBODIMENTS

The technical solution of the present invention is described in detail below with reference to the accompanying drawings.

In order to meet the demand for more timers, in the related art, a solution implements software timers as the following: creating a daemon when a timer linked list is created, the daemon looping through the timers in the timer linked list at a given interval to determine whether a timer is expired, and executing a corresponding scheduled task when a timer has indeed expired. In this solution, when the timer has a short timing duration, it is necessary to traverse through the timer linked list with a smaller time interval. In this way, the daemon needs to traverse through the timer linked list very frequently, leading to significant system power consumption as well as more processor resource being occupied. Moreover, the interval at which the daemon traverses through the timer linked list determines the accuracy of the software timer. When the timing duration of the timer in the timer linked list is shorter than the interval, the timer may have an increased error if it is executed. Therefore, the software timer implementation will greatly reduce the accuracy of the software timer.

Based on this, an embodiment of the present invention provides an implementation method and apparatus of timer, which act mainly by determining the counting period of the hardware timer according to the expiration time of the timer node expires first in the timer linked list. When the hardware timer counting period is expired and after traversing through the timer node in the timer linked list, the counting period of the hardware timer is updated instantly to reduce the number of times the timer linked list being traversed through, reducing system power consumption and processor resource occupancy rate while improving the accuracy of the software timer.

The implementation method and apparatus of timer provided by the embodiment of the present invention can be applied to various embedded systems or related products provided with timing service requirements. In addition, the method does not require support from the operating system, and can be applied to embedded systems with or without an operating system.

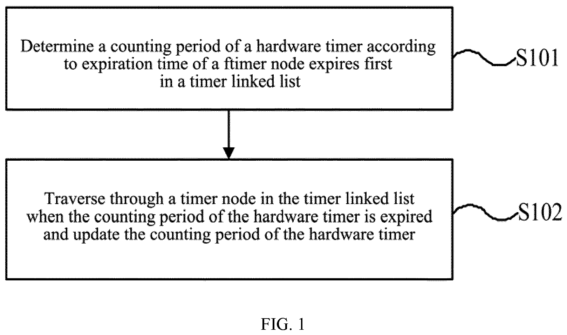

FIG. 1 is a schematic flowchart of an implementation method of timer according to an embodiment of the present invention, the execution body of the method may be an implementation apparatus of timer or an embedded system integrated with an implementation apparatus of timer, As shown in FIG. 1, the method provided in the embodiment includes the following steps: S101, determine a counting period of a hardware timer according to an expiration time of a timer node expires first in a timer linked list.

Specifically, the timer linked list is created according to the scheduled task requirement, hence a timer node in the timer linked list corresponds to a scheduled task that the system needs to handle. Each hardware timer in the system can maintain a timer linked list, that is, the timer node in each timer linked list share a common hardware timer.

Each scheduled task has a timing duration. When a timer node is created, the absolute time which the timer node reaches firstly, i.e., the expiration time of the timer node, can be calculated according to the timing duration of the scheduled task and current system time.

The timer node in the timer linked list can store information such as timer name, timing duration, expiration time, timing mode (including one-time timer and periodic timer), and callback function.

When the hardware timer is at work, it interrupts counting at certain intervals, and restarts counting when the counting period is reached. Hardware timers have a maximum counting period based on hardware characteristics of hardware timers.

In the embodiment, after the timer linked list is created, the counting period of the hardware timer is determined according to the expiration time of the timer node expires first in the timer linked list.

Specifically, when the time interval between the expiration time of the timer node expires first and the current system time is less than or equal to the maximum counting period of the hardware timer, the time interval is used as the counting period of the hardware timer. When the time interval between the expiration time of the timer node expires first and the current system time is greater than the maximum counting period of the hardware timer, the maximum counting period of the hardware timer is used as the counting period of the hardware timer.

In order to facilitate the operations, e.g., lookup and traversing, on the timer linked list and improve the processing speed, in this embodiment, each timer node in the timer linked list may be sorted according to their expiration time. At this point, the first timer node in the timer linked list is the timer node expires first. For convenience of description, the technical solutions of the embodiments of the present invention will also be described below by taking as an example each timer node in the timer linked list being sorted according to their expiration time.

S102, when the counting period of the hardware timer is expired, traverse through a timer node in the timer linked list and update the counting period of the hardware timer.

Specifically, when a counting period of a hardware timer is expired, which indicates that the first timer node in the timer linked list is expired, an interrupt service program can now be started to begin from the first timer node in the timer linked list to sequentially traverse through the timer node in the timer linked list, until the expired timer node is located, and the corresponding scheduled task is executed, that is, the callback function of the expired timer node is executed.

For a timer node whose timing mode is a one-time timer, the timer node is deleted after executing the corresponding callback function. For a timer node whose timing mode is a periodic timer, after executing the corresponding callback function, the time of the next expiration is updated for the timer node, and the timer node is inserted into the timer linked list by its order of expiration.

When traversing to an unexpired timer node or the end of the timer linked list, the counting period is updated for the hardware timer, that is, the counting period of the hardware timer is determined according to the expiration time of the first timer node in the traversed timer linked list. When the counting period of the hardware timer is expired, that is, when the next timer node is expired, the timer linked list is traversed again.

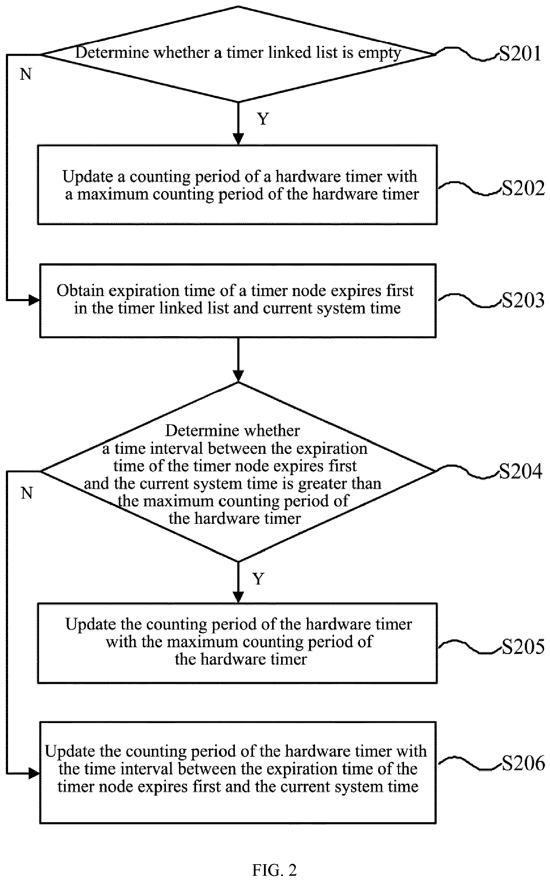

FIG. 2 is a schematic flowchart of a method for update a counting period of a hardware timer according to an embodiment of the present invention, as shown in FIG. 2, the updating the counting period of the hardware timer can be implemented as the following:
S201, determine whether a timer linked list is empty and, if yes, execute step S202, otherwise, execute step S203.

Specifically, after the first timer node in the timer linked list is expired and the traversing of the timer linked list is completed, the timer linked list may be empty or not empty.

When the timer linked list is not empty, the counting period of the hardware timer is determined according to the expiration time of the timer node expires first in the timer linked list. When the timer linked list is empty, the counting period of the hardware timer can be set arbitrarily.

S202, update a counting period of a hardware timer with a maximum counting period of the hardware timer.

In the embodiment, when the timer linked list is empty, the counting period of the hardware timer is updated with the maximum counting period of the hardware timer, so as to reduce the number of hardware timer interrupts as well as system power consumption and processor resource occupancy rate.

S203, obtain expiration time of a timer node expires first in the timer linked list and current system time.

When the timer linked list is not empty, the counting period of the hardware timer is determined according to the expiration time of the timer node expires first in the timer linked list. In this case, it is necessary to obtain the expiration time of the timer node expires first in the timer linked list and the current system time, so as to determine the counting period of the hardware timer according to the two obtained times.

S204, determine whether a time interval between the expiration time of the timer node expires first and the current system time is greater than the maximum counting period of the hardware timer and, if yes, execute step S205, otherwise, execute step S206.

Specifically, the timing duration may vary in length for individual timer node in the timer linked list. When the timing period of the timer node expires first is too long, the time interval between the expiration time and the current system time (that is, the difference between the expiration time of the timer node expires first and the current system time) may exceed the maximum counting period of the hardware timer, leading to overflow in the count of the hardware timer because the maximum counting period of the hardware timer has to be the maximum counting period. When the timing duration of the timer node expires first is relatively short, the counting period of the hardware timer can be directly set to be the time elapsed when the timer node is expired.

S205, update the counting period of the hardware timer with the maximum counting period of the hardware timer.

Specifically, when the time interval between the expiration time of the timer node expires first and the current system time is greater than the maximum counting period of the hardware timer, the counting period of the hardware timer is updated with the maximum counting period of the hardware timer. When the counting period of the hardware timer expires again, the counting period is re-updated for the hardware timer according to the expiration time of the first timer node in the timer linked list.

S206, update the counting period of the hardware timer with the time interval between the expiration time of the timer node expires first and the current system time.

Specifically, when the time interval between the expiration time of the timer node expires first and current system time is less than or equal to the maximum counting period of the hardware timer, the counting period of the hardware timer is updated with the time interval. When the counting period of the hardware timer expires again, the timer node expires first is expired, and then the timer linked list is traversed again.

In this embodiment, the timer linked list may share a hardware timer with the system timing. In the specific implementation, when the counting period of the hardware timer expires, the system time may be updated with the expiration time of the counting period of the hardware timer before traversing through the timer node in the timer linked list.

The system time is based on the count timing of the hardware timer. When the system time is timed using a separate hardware timer, the current system time is obtained by accumulating the time elapsed until the current count of the hardware timer on the basis of the system time when the hardware timer last reached its maximum counting period (that is, the product of the count of the hardware timer and the counting interval).

In the embodiment, each time the counting period of the hardware timer expires, the system time is firstly updated with the expiration time of the counting period of the hardware timer. Thus, the timer linked list can share a hardware timer with the system timing without affecting the system timing.

According to the implementation method of timer provided by the embodiment, the counting period of the hardware timer is determined according to the expiration time of the timer node expires first in the timer linked list; when the counting period of the hardware timer expires, the timer node in the timer linked list are traversed through, and then the counting period is updated for the hardware timer. Therefore, it is possible to traverse through the timer linked list only when a timer node is expired, without any need to constantly traverse through the timer linked list. Therefore, the system power consumption and processor resource occupancy rate can be effectively reduced. Moreover, the counting period of the hardware timer is updated in real time according to the expiration time of the timer node expires first in the timer linked list. Thus, the accuracy of the software timer is not affected by the counting period of the hardware timer because the accuracy of the software timer is equivalent to the accuracy of the hardware timer. Therefore, the accuracy of the software timer can be effectively improved.

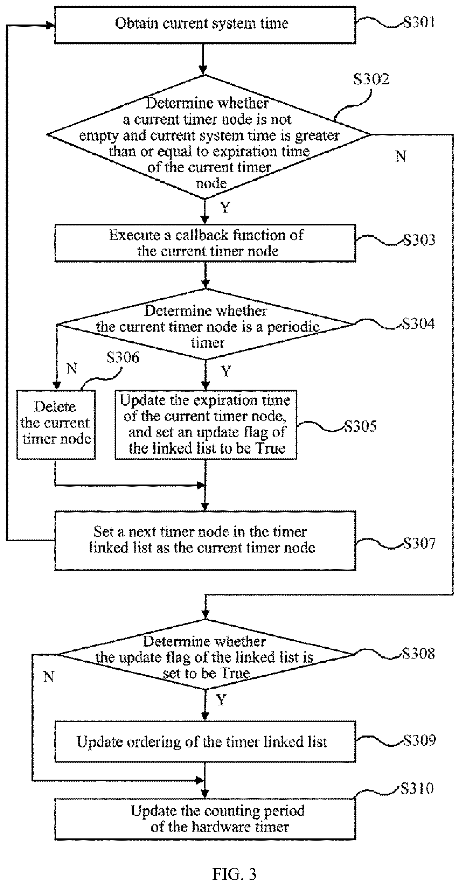

FIG. 3 is a schematic flowchart of another implementation method of timer according to an embodiment of the present invention. The embodiment is a specific implementation of step S102 in the above embodiment shown in FIG.1. Based on the above embodiment shown in FIG. 1, as shown in FIG. 3, the timer node in the timer linked list is traversed, and the counting period is updated for the hardware timer in step S102 may specifically include the following.

The first timer node in the timer linked list is used as the current timer node, and a traversing operation is performed on the current timer node, the traversing operation includes the following.

S301, obtain current system time.

Specifically, the expiration times of the timer nodes in the timer linked list may be the same as, or very similar to, each other. When a timer node in the timer linked list has an expiration time close to an expiration time of the first timer node, a subsequent timer node with a similar expiration time may expire when the first timer node is still being processed. Then, this timer node with similar expiration time also needs to be processed during the traversing process.

Based on this, when a timer node has been reached during the process of traversing through the timer linked list, current system time is firstly obtained in order to find out all timer nodes that have expired in the timer linked list during the current traversing process using the current system time.

S302, determine whether a current timer node is not empty and current system time is greater than or equal to expiration time of the current timer node and, if yes, execute step S303, otherwise, execute step S308;

Specifically, when the traversing has reached a timer node, a check needs to be made to see if the traversing has reached the end of the timer linked list or a timer node that is yet to expire.

When the timer node reached during the traversing (i.e., the current timer node) is an expired timer node, the scheduled task of the current timer node is executed.

When the timer node reached during the traversing is an empty node, it indicates that the traversing has reached to the end of the timer linked list, and there is no need to continue the traversing. Each timer node in the timer linked list is sorted according to their expiration time. When the timer node reached during the traversing is an unexpired timer node, it indicates that none of the timer nodes that follow have expired, and there is again no need to continue the traversing.

S303, execute a callback function of the current timer node.

If the current timer node is not empty and the current system time is greater than or equal to the expiration time of the current timer node, the current timer node is an expired timer node. At this point, the callback function of the current timer node is executed to carry out the corresponding scheduled task.

S304, determine whether the current timer node is a periodic timer and, if yes, execute step S305, otherwise, execute step S306.

In the embodiment, after the callback function of the current timer node is executed, a determination is made regarding whether the current timer node is a periodic timer. A one-time timer node is simply deleted after executing the callback function. A periodic timer node needs to have its expiration time being changed and then be inserted into the timer linked list according to its sequence of expiration time after the callback function is executed.

S305, update the expiration time of the current timer node, and set an update flag of the linked list to True.

Specifically, if the current timer node is a periodic timer, after the callback function of the current timer node is executed, the expiration time of the current timer node is updated with the time of the next expiration of the timer node, that is, the expiration time of the current timer node is updated with the sum of the timing duration of the timer node and the current system time.

In order to avoid compromising the order of traversing through the timer linked list, which may lead to missing a timer node during the traversing, this embodiment provides an update flag of the linked list, which is in turn set to True after the expiration time of the current timer node has been updated. The linked list is updated after the traversing.

S306, delete the current timer node.

Specifically, the current timer node will be simply deleted after the callback function of the timer node is executed if the current timer node is a one-time timer.

S307, set a next timer node in the timer linked list as the current timer node, and return to step S301.

Specifically, after the current timer node has been handled, the traversing continues to a next timer node, performing the above traversing operation on the next timer node.

S308, determine whether the update flag of the linked list is set to be True and, if yes, execute step S309, otherwise, execute step S310.

Specifically, after the traversing of the timer node is completed, the value of the update flag of the linked list is used in is determining whether there is a timer node whose timing mode is a periodic timer among the processed timer node. If there is a timer node whose timing mode is a periodic timer, the timer linked list will need to be resorted. If there is no timer node whose timing mode is a periodic timer, there is no need to process the timer linked list.

S309, update ordering of the timer linked list.

Specifically, update flag of the linked list being True indicates that a timer node whose timing mode is a periodic timer was processed during the traversing process. Then, the timer linked list is resorted, so that the processed timer node whose timing mode is a periodic timer is inserted into a proper position.

S310, update the counting period of the hardware timer.

Specifically, if the current timer node is empty or the current system time is less than the expiration time of the current timer node, the counting period of the hardware timer is updated after determining the update flag of the linked list. For the specific update method, reference may be made to the method shown in FIG. 2, which will not be repeated herein.

According to the method of timer implementation provided by the present embodiment, the current system time is firstly obtained when traversing through the timer linked list; a timer node that is expired is identified based on the current system time. Therefore, multiple scheduled tasks of timer nodes with similar expiration times can be processed in time to reduce system delay. Moreover, by providing the update flag of the linked list, missing of timer node during the traversing can be avoided, and accuracy of the software timer can be improved.

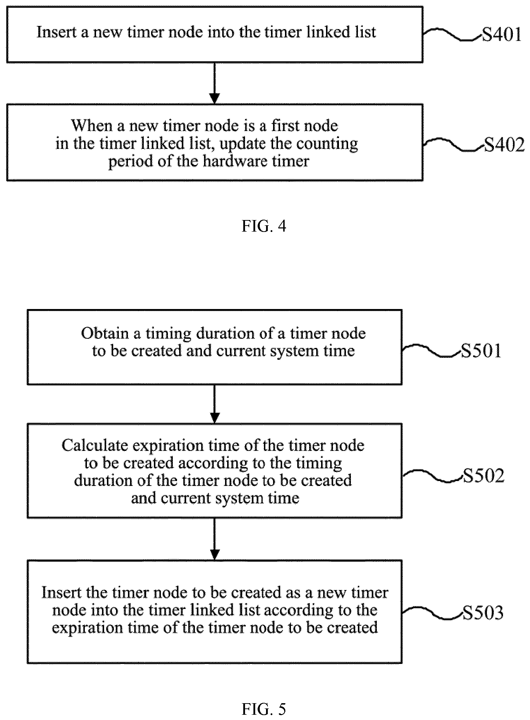

FIG. 4 is a schematic flowchart of still another implementation method of timer provided by the embodiment of the present invention. The embodiment serves to detail the process of creating a new timer node in the timer linked list. On the basis of the foregoing embodiments, as shown in FIG. 4, the method provided in the embodiment may further include the following steps.

S401, insert a new timer node into the timer linked list.

Specifically, when the user sets a new scheduled task, a new timer node can be inserted into the timer linked list according to the scheduled task.

FIG. 5 is a schematic flowchart of a method for inserting a new timer node into a timer linked list according to an embodiment of the present invention. As shown in FIG. 5, in this embodiment, the process of creating a new timer node may specifically include the following.

S501, obtain a timing duration of a timer node to be created and current system time.

Specifically, a new scheduled task (that is, a timer node to be created) has a timing duration. When a new scheduled task is received, the timing duration and the current system time may be obtained to determine the expiration time of the timer node to be created.

S502, calculate expiration time of the timer node to be created according to the timing duration of the timer node to be created and current system time.

Specifically, the timing duration of the timer node to be created is added to the current system time to obtain the expiration time of the timer node to be created.

S503, insert the timer node to be created as a new timer node into the timer linked list according to the expiration time of the timer node to be created.

Specifically, having determined the expiration time of the timer node to be created, a traversing may begin for the timer node in the timer linked list, so as to insert the timer node to be created as a new timer node into the timer linked list according to its expiration time, such that the expiration time of the new timer node is not less than the expiration time of its previous timer node and not greater than the expiration time of its next timer node.

S402, when a new timer node is the first node in the timer linked list, update the counting period of the hardware timer.

Specifically, when a new timer node is inserted into the timer linked list, it is necessary to determine whether the new timer node is the first timer node and, if yes, the counting period of the hardware timer needs to be updated For the specific manner of the update, one reference may be made to the method shown in FIG. 2, which will not be repeated herein.

According to the method of timer implementation provided in this embodiment, when a new timer node to be created in the timer linked list is the first node in the timer linked list, the counting period of the hardware timer is updated, so as to guarantee the correct order of processing the timer nodes in the timer linked list.

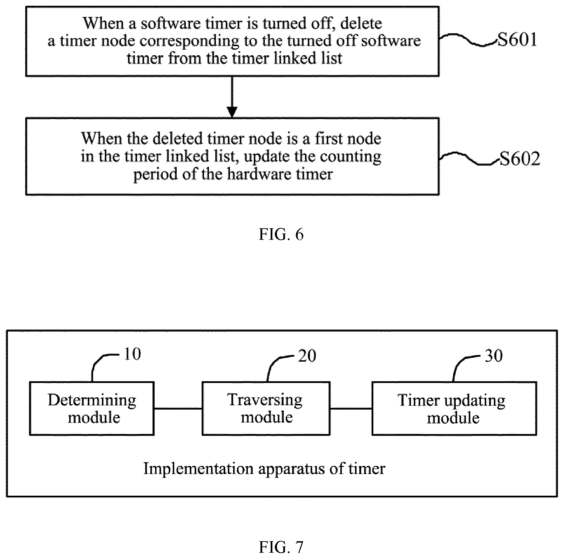

FIG. 6 is a schematic flowchart of still another implementation method of timer provided by the embodiment of the present invention. The embodiment describes the process of deleting a timer node from a timer linked list. On the basis of the foregoing embodiments, as shown in FIG. 6, the method provided in this embodiment may further include the following.

S601, when a software timer is turned off, delete a timer node corresponding to the turned off software timer from the timer linked list.

Specifically, when a user turns off a software timer, the scheduled task corresponding to the timer node in the timer linked list is canceled, and the timer node corresponding to the off software timer needs to be deleted.

S602, when the deleted timer node is the first node in the timer linked list, update the counting period of the hardware timer.

Specifically, when a timer node is deleted from a timer linked list, it is necessary to determine whether the deleted timer node is the first timer node and, if yes, the counting period of the hardware timer needs to be updated. For the specific update method, reference may be made to the method shown in FIG. 2, which will not be repeated herein.

According to the method of timer implementation provided by the embodiment, when a timer node being deleted from a timer linked list is the first node in the timer linked list, the counting period of the hardware timer is updated, so as to guarantee the correct order of processing the timer nodes in the timer linked list.

FIG. 7 is a schematic structural diagram of an implementation apparatus of timer according to an embodiment of the present invention. As shown in FIG. 7, the apparatus provided by the embodiment includes: a determining module 10, a traversing module 20, and a timer updating module 30, wherein:
the determining module 10 is configured to determine a counting period of a hardware timer according to expiration time of the timer node expires first in a timer linked list;
the traversing module 20 is configured to traverse a timer node in the timer linked list when the counting period of the hardware timer is expired, and instruct the timer updating module 30 to update the counting period of the hardware timer.

As an alternative implementation of the embodiment, each timer node in the timer linked list is sorted according to their expiration time.

The implementation apparatus of timer provided in this embodiment may perform the foregoing method embodiments with a similar implementation principle and technical effects, which will not be repeated herein.

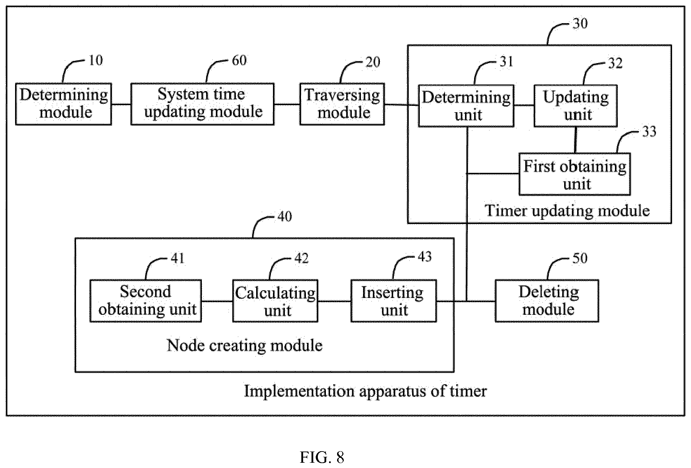

FIG. 8 is a schematic structural diagram of another implementation apparatus of timer provided by the embodiment of the present invention. The embodiment is a further optimization and supplement to the embodiment shown in FIG. 7 above. As shown in FIG. 8, in the apparatus provided in the embodiment, the timer updating module 30 includes:
a determining unit 31, configured to determine whether the timer linked list is empty;
an updating unit 32, configured to update the counting period of the hardware timer with the maximum counting period of the hardware timer when the timer linked list is empty; and
a first obtaining unit 33, configured to obtain the expiration time of the timer node expires first in the timer linked list and current system time when the timer linked list is not empty, wherein
the determining unit 31 is further configured to determine whether a time interval between the expiration time of the timer node expires first and the current system time is greater than the maximum counting period of the hardware timer; and
the updating unit 32 is further configured to: when the time interval is greater than the maximum counting period of the hardware timer, update the counting period of the hardware timer with the maximum counting period of the hardware timer; when the time interval is less than or equal to the maximum counting period of the hardware timer, update the counting period of the hardware timer with the time interval.

As an alternative implementation of the embodiment, the traversing module 20 is specifically configured to:
set the first timer node in the timer linked list to be a current timer node, and traverse through the current timer node, the traversing including:
   obtaining current system time;
   determining whether the current timer node is not empty and the current system time is greater than or equal to the expiration time of the current timer node; and
   if the current timer node is empty or the current system time is less than the expiration time of the current timer node, instructing the timer updating module 30 to update the counting period of the hardware timer;
   if the current timer node is not empty and the current system time is greater than or equal to the expiration time of the current timer node, executing a callback function of the current timer node;
setting a next timer node in the timer linked list as a current timer node, and returning to the traversing.

Further, the traversing module 20 may further be configured to:
determine whether the current timer node is a periodic timer and,
if the current timer node is a periodic timer, instruct the timer updating module 30 to update the expiration time of the current timer node, and set the update flag of the linked list to be True;
if the current timer node is a one-time timer, delete the current timer node;
the traversing module 20 is further configured to: determine whether the update flag of the linked list is set to be True when the current timer node is empty or the current system time is less than the expiration time of the current timer node, and before the timer updating module is instructed to update the counting period of the hardware timer and,
update the ordering of the timer linked list if the update flag of the linked list is set to be True.

As an alternative implementation of the embodiment, the apparatus may further include:
a node creating module 40, configured to insert a new timer node into the timer linked list, wherein
the node creating module 40 is further configured to, when the new timer node is the first node in the timer linked list, instruct the timer updating module 30 to update the counting period of the hardware timer.

Further, the node creating module 40 may specifically include:
a second obtaining unit 41, configured to obtain a timing duration of a timer node to be created and current system time;
a calculating unit 42, configured to calculate expiration time of the timer node to be created according to the timing duration of the timer node to be created and the current system time; and
an inserting unit 43, configured to insert a timer node to be created as a new timer node into the timer linked list according to the expiration time of the timer node to be created.

As an alternative implementation of the embodiment, the apparatus may further include:
a deleting module 50, configured to delete a timer node corresponding to an off software timer in the timer linked list when the software timer is turned off; and
the deleting module 50 is further configured to: instruct the timer updating module to update the counting period of the hardware timer when the deleted timer node is the first node in the timer linked list.

As another alternative implementation of the embodiment, the apparatus may further include: a system time updating module 60, configured to, when a counting period of a hardware timer expires, update system time with the expiration time of the counting period of the hardware timer before traversing the timer node in the timer linked list.

The apparatus provided in this embodiment may perform the foregoing method embodiments with a similar implementation principle and technical effects, which will not be repeated herein.

## Claims

1. An implementation method of timer in an embedded real-time operating system comprising:
determining (S101) a counting period of a hardware timer according to expiration time of a timer node which firstly expires in a timer linked list of a software timer, wherein the timer nodes in the timer linked list share the common hardware timer, the software timer implements a timing function of the hardware timer; and
when the counting period of the hardware timer is expired, traversing (S102) through the timer node in the timer linked list and updating the counting period of the hardware timer;
**characterized in that** the updating the counting period of the hardware timer comprises:
determining (S201) whether the timer linked list is empty and,
if the timer linked list is empty, updating (S202) the counting period of the hardware timer with a maximum counting period of the hardware timer;
if the timer linked list is not empty, obtaining (S203) the expiration time of the timer node which firstly expires in the timer linked list and current system time;
determining (S204) whether a time interval between the expiration time of the timer node which firstly expires and the current system time is greater than the maximum counting period of the hardware timer and,
if the time interval is greater than the maximum counting period of the hardware timer, updating (S205) the counting period of the hardware timer with the maximum counting period of the hardware timer;
if the time interval is less than or equal to the maximum counting period of the hardware timer, updating (S206) the counting period of the hardware timer with the time interval;
wherein each timer node in the timer linked list is sorted according to their expiration time;
wherein the traversing (S102) through the timer node in the timer linked list and updating the counting period of the hardware timer comprises:
setting a first timer node in the timer linked list to be a current timer node, and performing traversing operation on the current timer node, the traversing operation comprising:
obtaining (S301) current system time;
determining (S302) whether the current timer node is not empty and the current system time is greater than or equal to the expiration time of the current timer node;
updating (S310) the counting period of the hardware timer if the current timer node is empty or the current system time is less than the expiration time of the current timer node;
if the current timer node is not empty and the current system time is greater than or equal to the expiration time of the current timer node, executing (S303) a callback function of the current timer node; and
setting (S307) a next timer node in the timer linked list to be the current timer node, and returning to perform the traversing operation;
wherein, after the executing (S303) a callback function of the current timer node, the method further comprises:
determining (S304) whether the current timer node is a periodic timer and,
if the current timer node is a periodic timer, updating (S305) the expiration time of the current timer node, and setting an update flag of the timer linked list to be True;
if the current timer node is a one-time timer, deleting (S306) the current timer node;
when the current timer node is empty or the current system time is less than the expiration time of the current timer node, then before updating the counting period of the hardware timer, the method further comprises:
determining (S308) whether the update flag of the timer linked list is set to be True; and
updating (S309) ordering of the timer linked list if the update flag of the timer linked list is set to be True.

2. The method according to claim 1, wherein the method further comprises:
inserting (S401) a new timer node into the timer linked list; and
when the new timer node is the first timer node in the timer linked list, updating (S402) the counting period of the hardware timer.

3. The method according to claim 1 or 2, wherein the inserting a new timer node into the timer linked list comprises:
obtaining (S501) a timing duration of a timer node to be created and current system time;
calculating (S502) expiration time of the timer node to be created according to the timing duration of the timer node to be created and the current system time; and
inserting (S503) the timer node to be created as a new timer node into the timer linked list according to the expiration time of the timer node to be created.

4. An implementation apparatus of timer in an embedded real-time operating system comprising: a determining module (10), a traversing module (20) and a timer updating module (30), wherein:
the determining module (10) is configured to determine a counting period of a hardware timer according to expiration time of a timer node which firstly expires in a timer linked list of a software timer, wherein the timer nodes in the timer linked list share the common hardware timer, the software timer implements a timing function of the hardware timer;
the traversing module (20) is configured to, when the counting period of the hardware timer is expired, traverse through the timer node in the timer linked list, and instruct the timer updating module (30) to update the counting period of the hardware timer;
**characterized in that** the timer updating module (30) comprises:
a determining unit (31), configured to determine whether the timer linked list is empty;
an updating unit (32), configured to update the counting period of the hardware timer with a maximum counting period of the hardware timer when the timer linked list is empty;
a first obtaining unit (33), configured to obtain the expiration time of the timer node which firstly expires in the timer linked list and current system time when the timer linked list is not empty;
the determining unit (31) is further configured to determine whether a time interval between the expiration time of the timer node which firstly expires and the current system time is greater than the maximum counting period of the hardware timer; and
the updating unit (32) is further configured to update the counting period of the hardware timer with the maximum counting period of the hardware timer when the time interval is greater than the maximum counting period of the hardware timer, and update the counting period of the hardware timer with the time interval when the time interval is less than or equal to the maximum counting period of the hardware timer;
wherein each timer node in the timer linked list is sorted according to their expiration time;
wherein the traversing module (20) is configured to:
set a first timer node in the timer linked list to be a current timer node, and perform traversing operation on the current timer node, the traversing operation comprising:
obtaining current system time;
determining whether the current timer node is not empty and the current system time is greater than or equal to the expiration time of the current timer node and,
updating the counting period of the hardware timer if the current timer node is empty or the current system time is less than the expiration time of the current timer node;
if the current timer node is not empty and the current system time is greater than or equal to the expiration time of the current timer node, executing a callback function of the current timer node;
setting a next timer node in the timer linked list to be the current timer node, and returning to perform the traversing operation;
wherein the traversing module (20) is further configured to:
determine whether the current timer node is a periodic timer, and
if the current timer node is a periodic timer, instruct the timer updating module (30) to update the expiration time of the current timer node, and set an update flag of the timer linked list to be True;
if the current timer node is a one-time timer, delete the current timer node;
the traversing module (20) is further configured to: determine whether the update flag of the timer linked list is set to be True when the current timer node is empty or the current system time is less than the expiration time of the current timer node, and before updating the counting period of the hardware timer; and
update ordering of the timer linked list if the update flag of the timer linked list is set to be True.

5. The apparatus according to claim 4, further comprising:
a node creating module (40), configured to insert a new timer node into the timer linked list; and
the node creating module (40) is further configured to, when the new timer node is the first node in the timer linked list, update the counting period of the hardware timer.

6. The apparatus according to claim 4 or 5, wherein the apparatus further comprises:
a deleting module (50), configured to, when a software timer is turned off, delete a timer node corresponding to the turned off software timer from the timer linked list; and
the deleting module (50) is further configured to: when the deleted timer node is a first node in the timer linked list, update the counting period of the hardware timer.

7. The apparatus according to any one of claims 4-6, wherein the apparatus further comprises: a system time updating module (60), configured to, when the counting period of the hardware timer is expired and before traversing through the timer node in the timer linked list, update system time with the expiration time of the counting period of the hardware timer.

## Patentansprüche

1. Implementierungsverfahren eines Zeitgebers in einem eingebetteten Echtzeitbetriebssystem, das Folgendes umfasst:
Bestimmen (S101) einer Zählperiode eines Hardware-Zeitgebers gemäß der Ablaufzeit eines Zeitgeberknotens, der zuerst in einer Zeitgeberverknüpfungsliste eines Software-Zeitgebers abläuft, wobei die Zeitgeberknoten in der Zeitgeberverknüpfungsliste den gemeinsamen Hardware-Zeitgeber teilen, der Software-Zeitgeber eine Zeitgebungsfunktion des Hardware-Zeitgebers implementiert; und
wenn die Zählperiode des Hardware-Zeitgebers abgelaufen ist, Durchlaufen (S102) des Zeitgeberknotens in der Zeitgeberverknüpfungsliste und Aktualisieren der Zählperiode des Hardware-Zeitgebers;
**dadurch gekennzeichnet, dass** das Aktualisieren der Zählperiode des Hardware-Zeitgebers Folgendes umfasst:
Bestimmen (S201), ob die Zeitgeberverknüpfungsliste leer ist, und,
wenn die Zeitgeberverknüpfungsliste leer ist, Aktualisieren (S202) der Zählperiode des Hardware-Zeitgebers mit einer maximalen Zählperiode des Hardware-Zeitgebers;
wenn die Zeitgeberverknüpfungsliste nicht leer ist, Ermitteln (S203) der Ablaufzeit des Zeitgeberknotens, der in der Zeitgeberverknüpfungsliste als erster abläuft, und der aktuellen Systemzeit;
Bestimmen (S204), ob ein Zeitintervall zwischen der Ablaufzeit des Zeitgeberknotens, der zuerst abläuft, und der aktuellen Systemzeit größer ist als die maximale Zählperiode des Hardware-Zeitgebers und,
wenn das Zeitintervall größer ist als die maximale Zählperiode des Hardware-Zeitgebers, Aktualisieren (S205) der Zählperiode des Hardware-Zeitgebers mit der maximalen Zählperiode des Hardware-Zeitgebers;
wenn das Zeitintervall kleiner oder gleich der maximalen Zählperiode des Hardware-Zeitgebers ist, Aktualisieren (S206) der Zählperiode des Hardware-Zeitgebers mit dem Zeitintervall;
wobei jeder Zeitgeberknoten in der Zeitgeberverknüpfungsliste gemäß ihrer Ablaufzeit sortiert wird;
wobei das Durchlaufen (S102) des Zeitgeberknotens in der Zeitgeberverknüpfungsliste und das Aktualisieren der Zählperiode des Hardware-Zeitgebers Folgendes umfasst:
Festlegen eines ersten Zeitgeberknotens in der Zeitgeberverknüpfungsliste als aktueller Zeitgeberknoten, und Durchführen einer Durchlaufoperation an dem aktuellen Zeitgeberknoten, wobei die Durchlaufoperation Folgendes umfasst:
Ermitteln (S301) der aktuellen Systemzeit;
Bestimmen (S302), ob der aktuelle Zeitgeberknoten nicht leer ist und die aktuelle Systemzeit größer als oder gleich der Ablaufzeit des aktuellen Zeitgeberknotens ist;
Aktualisieren (S310) der Zählperiode des Hardware-Zeitgebers, wenn der aktuelle Zeitgeberknoten leer ist oder die aktuelle Systemzeit kleiner als die Ablaufzeit des aktuellen Zeitgeberknotens ist;
wenn der aktuelle Zeitgeberknoten nicht leer ist und die aktuelle Systemzeit größer oder gleich der Ablaufzeit des aktuellen Zeitgeberknotens ist, Ausführen (S303) einer Rückruffunktion des aktuellen Zeitgeberknotens; und
Festlegen (S307) eines nächsten Zeitgeberknotens in der Zeitgeberverknüpfungsliste als den aktuellen Zeitgeberknoten, und Zurückkehren, um die Durchlaufoperation durchzuführen;
wobei das Verfahren nach dem Ausführen (S303) einer Rückruffunktion des aktuellen Zeitgeberknotens ferner Folgendes umfasst:
Bestimmen (S304), ob der aktuelle Zeitgeberknoten ein periodischer Zeitgeber ist, und,
wenn der aktuelle Zeitgeberknoten ein periodischer Zeitgeber ist, Aktualisieren (S305) der Ablaufzeit des aktuellen Zeitgeberknotens, und Setzen eines Aktualisierungsflags der Zeitgeberverknüpfungsliste auf Wahr;
wenn der aktuelle Zeitgeberknoten ein einmaliger Zeitgeber ist, Löschen (S306) des aktuellen Zeitgeberknotens;
wenn der aktuelle Zeitgeberknoten leer ist oder die aktuelle Systemzeit kleiner ist als die Ablaufzeit des aktuellen Zeitgeberknotens, dann umfasst vor dem Aktualisieren der Zählperiode des Hardware-Zeitgebers das Verfahren ferner Folgendes:
Bestimmen (S308), ob das Aktualisierungsflag der Zeitgeberverknüpfungsliste auf Wahr gesetzt ist; und
Aktualisieren (S309) der Reihenfolge der Zeitgeberverknüpfungsliste, wenn das Aktualisierungsflag der Zeitgeberverknüpfungsliste auf Wahr gesetzt ist.

2. Verfahren nach Anspruch 1, wobei das Verfahren ferner Folgendes umfasst:
Einfügen (S401) eines neuen Zeitgeberknotens in die Zeitgeberverknüpfungsliste; und
wenn der neue Zeitgeberknoten der erste Zeitgeberknoten in der Zeitgeberverknüpfungsliste ist, Aktualisieren (S402) der Zählperiode des Hardware-Zeitgebers.

3. Verfahren nach Anspruch 1 oder 2, wobei das Einfügen eines neuen Zeitgeberknotens in die Zeitgeberverknüpfungsliste Folgendes umfasst:
Ermitteln (S501) einer Zeitdauer eines zu erstellenden Zeitgeberknotens und der aktuellen Systemzeit;
Berechnen (S502) der Ablaufzeit des zu erstellenden Zeitgeberknotens gemäß der Zeitdauer des zu erstellenden Zeitgeberknotens und der aktuellen Systemzeit; und
Einfügen (S503) des zu erstellenden Zeitgeberknotens als neuer Zeitgeberknoten in die Zeitgeberverknüpfungsliste entsprechend der Ablaufzeit des zu erstellenden Zeitgeberknotens.

4. Implementierungsvorrichtung eines Zeitgebers in einem eingebetteten Echtzeitbetriebssystem, die Folgendes umfasst: ein Bestimmungsmodul (10), ein Durchlaufmodul (20) und ein Zeitgeberaktualisierungsmodul (30), wobei:
das Bestimmungsmodul (10) dafür konfiguriert ist, eine Zählperiode eines Hardware-Zeitgebers gemäß der Ablaufzeit eines Zeitgeberknotens zu bestimmen, der zuerst in einer Zeitgeberverknüpfungsliste eines Software-Zeitgebers abläuft, wobei die Zeitgeberknoten in der Zeitgeberverknüpfungsliste den gemeinsamen Hardware-Zeitgeber teilen, der Software-Zeitgeber eine Zeitgebungsfunktion des Hardware-Zeitgebers implementiert;
das Durchlaufmodul (20) dafür konfiguriert ist, wenn die Zählperiode des Hardware-Zeitgebers abgelaufen ist, den Zeitgeberknoten in der Zeitgeberverknüpfungsliste zu durchlaufen, und das Zeitgeberaktualisierungsmodul (30) anzuweisen, die Zählperiode des Hardware-Zeitgebers zu aktualisieren;
**dadurch gekennzeichnet, dass** das Zeitgeberaktualisierungsmodul (30) Folgendes umfasst:
eine Bestimmungseinheit (31), die dafür konfiguriert ist, zu bestimmen, ob die Zeitgeberverknüpfungsliste leer ist;
eine Aktualisierungseinheit (32), die dafür konfiguriert ist, die Zählperiode des Hardware-Zeitgebers mit einer maximalen Zählperiode des Hardware-Zeitgebers zu aktualisieren, wenn die Zeitgeberverknüpfungsliste leer ist;
eine erste Ermittlungseinheit (33), die dafür konfiguriert ist, die Ablaufzeit des Zeitgeberknotens, der als erstes in der Zeitgeberverknüpfungsliste abläuft, und die aktuelle Systemzeit zu ermitteln, wenn die Zeitgeberverknüpfungsliste nicht leer ist;
wobei die Bestimmungseinheit (31) ferner dafür konfiguriert ist, zu bestimmen, ob ein Zeitintervall zwischen der Ablaufzeit des Zeitgeberknotens, der zuerst abläuft, und der aktuellen Systemzeit größer ist als die maximale Zählperiode des Hardware-Zeitgebers; und
die Aktualisierungseinheit (32) ferner dafür konfiguriert ist, die Zählperiode des Hardware-Zeitgebers mit der maximalen Zählperiode des Hardware-Zeitgebers zu aktualisieren, wenn das Zeitintervall größer ist als die maximale Zählperiode des Hardware-Zeitgebers, und die Zählperiode des Hardware-Zeitgebers mit dem Zeitintervall zu aktualisieren, wenn das Zeitintervall kleiner als oder gleich der maximalen Zählperiode des Hardware-Zeitgebers ist;
wobei jeder Zeitgeberknoten in der Zeitgeberverknüpfungsliste gemäß ihrer Ablaufzeit sortiert wird;
wobei das Durchlaufmodul (20) für Folgendes konfiguriert ist:
Festlegen eines ersten Zeitgeberknotens in der Zeitgeberverknüpfungsliste als aktueller Zeitgeberknoten, und Durchführen einer Durchlaufoperation an dem aktuellen Zeitgeberknoten, wobei die Durchlaufoperation Folgendes umfasst:
Ermitteln der aktuellen Systemzeit;
Bestimmen, ob der aktuelle Zeitgeberknoten nicht leer ist und die aktuelle Systemzeit größer als oder gleich der Ablaufzeit des aktuellen Zeitgeberknotens ist, und
Aktualisieren der Zählperiode des Hardware-Zeitgebers, wenn der aktuelle Zeitgeberknoten leer ist oder die aktuelle Systemzeit kleiner als die Ablaufzeit des aktuellen Zeitgeberknotens ist;
wenn der aktuelle Zeitgeberknoten nicht leer ist und die aktuelle Systemzeit größer oder gleich der Ablaufzeit des aktuellen Zeitgeberknotens ist, Ausführen einer Rückruffunktion des aktuellen Zeitgeberknotens;
Festlegen eines nächsten Zeitgeberknotens in der Zeitgeberverknüpfungsliste als den aktuellen Zeitgeberknoten, und Zurückkehren, um die Durchlaufoperation durchzuführen;
wobei das Durchlaufmodul (20) ferner für Folgendes konfiguriert ist:
Bestimmen, ob der aktuelle Zeitgeberknoten ein periodischer Zeitgeber ist, und,
wenn der aktuelle Zeitgeberknoten ein periodischer Zeitgeber ist, Anweisen des Zeitgeberaktualisierungsmoduls (30), die Ablaufzeit des aktuellen Zeitgeberknotens zu aktualisieren, und Setzen eines Aktualisierungsflags der Zeitgeberverknüpfungsliste auf Wahr;
wenn der aktuelle Zeitgeberknoten ein einmaliger Zeitgeber ist, Löschen des aktuellen Zeitgeberknotens;
wobei das Durchlaufmodul (20) ferner für Folgendes konfiguriert ist: Bestimmen, ob das Aktualisierungsflag der Zeitgeberverknüpfungsliste auf Wahr gesetzt ist, wenn der aktuelle Zeitgeberknoten leer ist oder die aktuelle Systemzeit kleiner als die Ablaufzeit des aktuellen Zeitgeberknotens ist, und vor dem Aktualisieren der Zählperiode des Hardware-Zeitgebers; und
Aktualisieren der Reihenfolge der Zeitgeberverknüpfungsliste, wenn das Aktualisierungsflag der Zeitgeberverknüpfungsliste auf Wahr gesetzt ist.

5. Vorrichtung nach Anspruch 4, die ferner Folgendes umfasst:
ein Knotenerzeugungsmodul (40), das dafür konfiguriert ist, einen neuen Zeitgeberknoten in die Zeitgeberverknüpfungsliste einzufügen; und
wobei das Knotenerzeugungsmodul (40) ferner dafür konfiguriert ist, wenn der neue Zeitgeberknoten der erste Knoten in der Zeitgeberverknüpfungsliste ist, die Zählperiode des Hardware-Zeitgebers zu aktualisieren.

6. Vorrichtung nach Anspruch 4 oder 5, wobei die Vorrichtung ferner Folgendes umfasst:
ein Löschmodul (50), das dafür konfiguriert ist, wenn ein Software-Zeitgeber ausgeschaltet wird, einen Zeitgeberknoten, der dem ausgeschalteten Software-Zeitgeber entspricht, aus der Zeitgeberverknüpfungsliste zu löschen; und
wobei das Löschmodul (50) ferner für Folgendes konfiguriert ist: wenn der gelöschte Zeitgeberknoten ein erster Knoten in der Zeitgeberverknüpfungsliste ist, Aktualisieren der Zählperiode des Hardware-Zeitgebers.

7. Vorrichtung nach einem der Ansprüche 4 bis 6, wobei die Vorrichtung ferner Folgendes umfasst: ein Systemzeit-Aktualisierungsmodul (60), das dafür konfiguriert ist, wenn die Zählperiode des Hardware-Zeitgebers abgelaufen ist und bevor der Zeitgeberknoten in der Zeitgeberverknüpfungsliste durchlaufen wird, die Systemzeit mit der Ablaufzeit der Zählperiode des Hardware-Zeitgebers zu aktualisieren.

## Revendications

1. Procédé de mise en œuvre d'un temporisateur dans un système d'exploitation en temps réel embarqué comprenant :
la détermination (S101) d'une période de comptage d'un temporisateur matériel en fonction du temps d'expiration d'un nœud de temporisateur qui expire premièrement dans une liste liée de temporisateur d'un temporisateur logiciel, dans lequel les nœuds de temporisateur dans la liste liée de temporisateur partagent le temporisateur matériel commun, le temporisateur logiciel implémente une fonction de synchronisation du temporisateur matériel ; et
lorsque la période de comptage du temporisateur matériel est expirée, la traversée (S102) du nœud de temporisateur dans la liste liée de temporisateur et la mise à jour de la période de comptage du temporisateur matériel ;
**caractérisé en ce que** la mise à jour de la période de comptage du temporisateur matériel comprend :
la détermination (S201) si la liste liée de temporisateur est vide et,
si la liste liée de temporisateur est vide, la mise à jour (S202) de la période de comptage du temporisateur matériel avec une période de comptage maximale du temporisateur matériel ;
si la liste liée de temporisateur n'est pas vide, l'obtention (S203) du temps d'expiration du nœud de temporisateur qui expire premièrement dans la liste liée de temporisateur et le temps de système actuel ;
la détermination (S204) si un intervalle de temps entre le temps d'expiration du nœud de temporisateur qui expire en premier et le temps système actuel est supérieur à la période de comptage maximale du temporisateur matériel et,
si l'intervalle de temps est supérieur à la période de comptage maximale du temporisateur matériel, la mise à jour (S205) de la période de comptage du temporisateur matériel avec la période de comptage maximale du temporisateur matériel ;
si l'intervalle de temps est inférieur ou égal à la période de comptage maximale du temporisateur matériel, la mise à jour (S206) de la période de comptage du temporisateur matériel avec l'intervalle de temps ;
dans lequel chaque nœud de temporisateur dans la liste liée de temporisateur est trié en fonction de son temps d'expiration ;
dans lequel la traversée (S102) à travers le nœud de temporisateur dans la liste liée de temporisateur et la mise à jour de la période de comptage du temporisateur matériel comprend :
la définition d'un premier nœud de temporisateur dans la liste liée de temporisateur pour être un nœud de temporisateur actuel, et l'exécution d'une opération de traversée sur le nœud de temporisateur actuel, l'opération de traversée comprenant :
l'obtention (S301) du temps de système actuel ;
la détermination (S302) si le nœud de temporisateur actuel n'est pas vide et si le temps de système actuel est supérieur ou égal au temps d'expiration du nœud de temporisateur actuel ;
la mise à jour (S310) de la période de comptage du temporisateur matériel si le nœud de temporisateur actuel est vide ou si le temps de système actuel est inférieur au temps d'expiration du nœud de temporisateur actuel ;
si le nœud de temporisateur actuel n'est pas vide et que le temps de système actuel est supérieur ou égal au temps d'expiration du nœud de temporisateur actuel, l'exécution (S303) d'une fonction de rappel du nœud de temporisateur actuel ; et
la définition (S307) d'un nœud de temporisateur suivant dans la liste liée de temporisateur pour qu'il soit le nœud de temporisateur actuel, et le retour pour effectuer l'opération de traversée ;
dans lequel, après l'exécution (S303) d'une fonction de rappel du nœud de temporisateur actuel, le procédé comprend en outre :
la détermination (S304) si le nœud de temporisateur actuel est un temporisateur périodique et,
si le nœud de temporisateur actuel est un temporisateur périodique, la mise à jour (S305) du temps d'expiration du nœud de temporisateur actuel, et la définition d'un indicateur de mise à jour de la liste liée de temporisateur comme Vrai ;
si le nœud de temporisateur actuel est un temporisateur à usage unique, la suppression (S306) du nœud de temporisateur actuel ;
lorsque le nœud de temporisateur actuel est vide ou que le temps de système actuel est inférieur au temps d'expiration du nœud de temporisateur actuel, puis avant la mise à jour de la période de comptage du temporisateur matériel, le procédé comprend en outre :
la détermination (S308) si l'indicateur de mise à jour de la liste liée de temporisateur est définie comme Vrai ; et
la mise à jour (S309) de l'ordre de la liste liée de temporisateur si l'indicateur de mise à jour de la liste liée de temporisateur est défini comme Vrai.

2. Procédé selon la revendication 1, dans lequel le procédé comprend en outre :
l'insertion (S401) d'un nouveau nœud de temporisateur dans la liste liée de temporisateur ; et
lorsque le nouveau nœud de temporisateur est le premier nœud de temporisateur dans la liste liée de temporisateur, la mise à jour (S402) de la période de comptage du temporisateur matériel.

3. Procédé selon la revendication 1 ou 2, dans lequel l'insertion d'un nouveau nœud de temporisation dans la liste liée de temporisation comprend :
l'obtention (S501) d'une durée de temporisation d'un nœud de temporisateur à créer et du temps de système actuel ;
le calcule (S502) du temps d'expiration du nœud de temporisateur à créer en fonction de la durée de temporisation du nœud de temporisateur à créer et du temps de système actuelle ; et
l'insertion (S503) du nœud de temporisateur à créer en tant que nouveau nœud de temporisateur dans la liste liée de temporisateur en fonction du temps d'expiration du nœud de temporisateur à créer.

4. Appareil de mise en œuvre de temporisateur dans un système d'exploitation en temps réel embarqué comprenant : un module de détermination (10), un module de traversée (20) et un module de mise à jour de temporisateur (30), dans lequel :
le module de détermination (10) est configuré pour déterminer une période de comptage d'un temporisateur matériel en fonction du temps d'expiration d'un nœud de temporisateur qui expire premièrement dans une liste liée de temporisateur d'un temporisateur logiciel, dans lequel les nœuds de temporisateur dans la liste liée de temporisateur partagent le temporisateur matériel commun, le temporisateur logiciel implémente une fonction de temporisation du temporisateur matériel ;
le module de traversée (20) est configuré pour, lorsque la période de comptage du temporisateur matériel est expirée, traverser le nœud de temporisateur dans la liste liée de temporisateur, et
ordonner au module de mise à jour de temporisateur (30) de mettre à jour la période de comptage du temporisateur matériel ;
**caractérisé en ce que** le module de mise à jour de temporisateur (30) comprend :
une unité de détermination (31), configurée pour déterminer si la liste liée de temporisateur est vide ;
une unité de mise à jour (32), configurée pour mettre à jour la période de comptage du temporisateur matériel avec une période de comptage maximale du temporisateur matériel lorsque la liste liée de temporisateur est vide ;
une première unité d'obtention (33), configurée pour obtenir le temps d'expiration du nœud de temporisateur qui expire premièrement dans la liste liée de temporisateur et le temps de système actuel lorsque la liste liée de temporisateur n'est pas vide ;
l'unité de détermination (31) est en outre configurée pour déterminer si un intervalle de temps entre le temps d'expiration du nœud de temporisateur qui expire premièrement et le temps de système actuel est supérieur à la période de comptage maximale du temporisateur matériel ; et
l'unité de mise à jour (32) est en outre configurée pour mettre à jour la période de comptage du temporisateur matériel avec la période de comptage maximale du temporisateur matériel lorsque l'intervalle de temps est supérieur à la période de comptage maximale du temporisateur matériel,
et mettre à jour la période de comptage du temporisateur matériel avec l'intervalle de temps lorsque l'intervalle de temps est inférieur ou égal à la période de comptage maximale du temporisateur matériel ;
dans lequel chaque nœud de temporisateur dans la liste liée de temporisateur est trié en fonction de son temps d'expiration ;
dans lequel le module de traversée (20) est configuré pour :
définir un premier nœud de temporisateur dans la liste liée de temporisateur pour être un nœud temporisateur actuel, et effectuer une opération de traversée sur le nœud de temporisateur actuel, l'opération de traversée comprenant :
l'obtention du temps de système actuel ;
la détermination si le nœud de temporisateur actuel n'est pas vide et si le temps de système actuel est supérieur ou égal au temps d'expiration du nœud de temporisateur actuel et,
la mise à jour de la période de comptage du temporisateur matériel si le nœud de temporisateur actuel est vide ou le temps de système actuel est inférieur au temps d'expiration du nœud de temporisateur actuel ;
si le nœud temporisateur actuel n'est pas vide et que le temps de système actuel est supérieur ou
égal au temps d'expiration du nœud de temporisateur actuel, l'exécution d'une fonction de rappel du nœud de temporisateur actuel ;
la définition d'un nœud de temporisateur suivant dans la liste liée de temporisateur pour qu'il soit le nœud de temporisateur actuel, et le retour pour effectuer l'opération de traversée ;
dans lequel le module de traversée (20) est en outre configuré pour :
déterminer si le nœud de temporisateur actuel est un temporisateur périodique, et
si le nœud de temporisateur actuel est un temporisateur périodique, ordonner au module de mise à jour de temporisateur (30) de mettre à jour le temps d'expiration du nœud de temporisateur, et
définir un indicateur de mise à jour de la liste liée de temporisateur comme Vrai ;
si le nœud de temporisateur actuel est un temporisateur à usage unique, supprimer le nœud de temporisateur actuel ;
le module de traversée (20) est en outre configuré pour : déterminer si l'indicateur de mise à jour de la liste liée de temporisateur est défini comme Vrai lorsque le nœud de temporisateur actuel est vide ou que le temps de système actuel est inférieur au temps d'expiration du nœud de temporisateur actuel, et avant de mettre à jour la période de comptage du temporisateur matériel ; et
ordonner la mise à jour de la liste liée de temporisateur si l'indicateur de mise à jour de la liste liée de temporisateur est défini comme Vrai.

5. Appareil selon la revendication 4, comprenant en outre :
un module de création de nœud (40), configuré pour insérer un nouveau nœud de temporisateur dans la liste liée de temporisateur ; et
le module de création de nœud (40) est en outre configuré pour, lorsque le nouveau nœud de temporisateur est le premier nœud dans la liste liée de temporisateur, mettre à jour la période de comptage du temporisateur matériel.

6. Appareil selon la revendication 4 ou 5, dans lequel l'appareil comprend en outre :
un module de suppression (50), configuré pour, lorsqu'un temporisateur logiciel est désactivé, supprimer un nœud de temporisateur correspondant au temporisateur logiciel désactivé de la liste liée de temporisateur ; et
le module de suppression (50) est en outre configuré pour : lorsque le nœud de temporisateur supprimé est un premier nœud dans la liste liée de temporisateur, mettre à jour la période de comptage du temporisateur matériel.

7. Appareil selon l'une quelconque des revendications 4 à 6, dans lequel l'appareil comprend en outre : un module de mise à jour du temps de système (60), configuré pour, lorsque la période de comptage du temporisateur matériel est expirée et avant la traversée du nœud de temporisateur dans la liste liée de temporisateur, mettre à jour le temps de système avec le temps d'expiration de la période de comptage du temporisateur matériel.
